# EUROPÄISCHE PATENTSCHRIFT

(11) **EP 1 330 485 B1**
(45) Veröffentlichungstag und Bekanntmachung des Hinweises auf die Patenterteilung: **16.04.2008**
(21) Anmeldenummer: 01992732.6
(22) Anmeldetag: 20.10.2001
(51) Int. Cl.: C08G 73/18, C08G 73/22, C08G 75/32, H01M 8/10

(54) **VERFAHREN ZUR HERSTELLUNG EINER LÖSUNG VON EINEM POLYMER ENTHALTEND WIEDERKEHRENDE AZOLEINHEITEN**
METHOD FOR PRODUCING A SOLUTION COMPRISING A POLYMER CONTAINING RECURRENT AZOLE UNITS
PROCEDE DE PRODUCTION D'UNE SOLUTION CONSTITUEE D'UN POLYMERE CONTENANT DES UNITES AZOLE RECURRENTES

(30) Priorität: 21.10.2000 DE 10052237
(43) Veröffentlichungstag der Anmeldung: 30.07.2003
(73) Patentinhaber: BASF Fuel Cell GmbH, 65926 Frankfurt am Main (DE)
(72) Erfinder: SOCZKA-GUTH, Thomas, 89601 Schelklingen (DE); PAWLIK, Jürgen, 65931 Frankfurt (DE); TIEFENSTÄDTER, Reiner, 61191 Rosbach v.d.H. (DE); BRENDEL, Peter, 61276 Weilrod (DE); JORDT, Frauke, 65817 Eppstein (DE)
(74) Vertreter: Dörr, Klaus
(86) Internationale Anmeldenummer: PCT/EP2001/012146
(87) Internationale Veröffentlichungsnummer: WO 2002/036661

(56) Entgegenhaltungen:
- EP-A- 0 816 415
- US-A- 5 599 639

## Beschreibung

Die vorliegende Erfindung betrifft das Gebiet der Polymerlösungen. Insbesondere bezieht sich die Erfindung auf ein Verfahren zur Herstellung einer Polymerlösung, gemäß Anspruch 1.

Die gemäß diesem Verfahren erhaltenen Lösungen eines Polymers enthaltend wiederkehrende Azoleinheiten können als hitze- oder chemikalienbeständige Filmbildungsmaterialien eingesetzt werden. Wegen ihrer vorzüglichen Haftung auf Metalloberflächen können sie auch als wärmebeständige Metallklebstoffe verwendet werden. Aufgrund ihrer Beständigkeit gegenüber allen Lösungsmitteln, Ölen, Säuren und Alkalien werden sie im Einzelfall als Lacke und Überzüge geschätzt. Weiterhin sind sie auch für die Herstellung von Polymermembranen, die insbesondere in Brennstoffzellen Verwendung finden, von Bedeutung.

Es ist bereits bekannt, daß Lösungen von hitze- und chemikalienbeständigen Harzen wie z. B. Polymere enthaltend wiederkehrende Azoleinheiten schwer zu erhalten sind. Selbst wenn das Harz in speziellen organischen Lösungsmitteln gelöst wird, nimmt seine Löslichkeit mit der Zeit wegen der Bildung von Assoziaten und wegen anderer Faktoren ab. Insbesondere wenn die Konzentration von Polymeren enthaltend wiederkehrende Azoleinheiten in der Lösung vergleichsweise hoch ist, tritt die Bildung von Assoziaten aus Azoleinheiten sehr schnell auf. Die Lagerbeständigkeit solcher Lösung ist sehr kurz, sie reicht nur von mehreren Tagen bis hin zu 1 oder 2 Wochen. In manchen Fällen kann die Lagerbeständigkeit der Lösungen durch die Zugabe von Metallsalzen und anderen Stabilisatoren verlängert werden. Jedoch ist für die meisten elektronischen Bauteile, für deren Herstellung Lösungen von Polymeren enthaltend wiederkehrende Azoleinheiten benötigt werden, der Einbau von Metallsalzen nicht erwünscht, weil sie die charakteristischen Eigenschaften der Bauteile verschlechtern. Vor allem werden die Eigenschaften von Halbleitern und Anzeigegeräten in einem starken Maße durch solche metallischen Verunreinigungen beeinflußt und die Verwendung der Lösungen von Polymeren enthaltend wiederkehrende Azoleinheiten für diese Anwendungen ist sehr begrenzt.

Einen ersten Lösungsansatz für diese Probleme offenbart die Patentanmeldung EP-A-0816 415. Dieses Dokument stellt ein Verfahren zur Herstellung von Lösungen eines Polymers enthaltend wiederkehrende Benzimidazoleinheiten zur Verfügung, die ohne einen Einsatz von Stabilisatoren und Metallsalzen verhältnismäßig lange lagerbar sind. Dabei wird ein vollständig getrocknetes Polymer enthaltend wiederkehrende Benzimidazoleinheiten in N,N-Dimethylacetamid mit hinreichend niedrigem Wassergehalt bei einer erhöhten Temperatur von 260°C oder höher unter Inertgas gelöst. Nachteilig an diesem Verfahren ist, daß die auf diese Weise erhaltenen Lösungen eines Polymers enthaltend wiederkehrende Benzimidazoleinheiten, obwohl sie zum Teil keinen Amingeruch haben, Verunreinigungen in Form von niedermolekularen Zersetzungsprodukten wie Dimethylamin und Trimethylamin sowie durch Filtration abtrennbaren Anteilen enthalten. Der Anwendungsbereich solcher Lösungen eines Polymers enthaltend wiederkehrende Benzimidazoleinheiten ist begrenzt, weil die Anwesenheit von Verunreinigungen dieser Art ihren Einsatz In vielen Bereichen nicht ermöglicht. So ist z. B. ausgehend von den bekannten Lösungen eines Polymers enthaltend wiederkehrende Benzimidazoleinheiten die Herstellung qualitativ hochwertiger Polyelektrolyt-Membranen, die unter anderem in Brennstoffzellen Verwendung finden, nahezu unmöglich.

In Anbetracht des Standes der Technik ist es nun Aufgabe der vorliegenden Erfindung, Verfahren zur Herstellung einer Lösung von einem Polymer enthaltend wiederkehrende Azoleinheiten zur Verfügung zu stellen, die im wesentlichen frei von Zersetzungsprodukten und an durch Filtration abtrennbaren Anteilen ist. Insbesondere soll bei der Abtrennung der Zersetzungsprodukte die Verwendung von aufwendigen Verfahren, wie chromatographischen Methoden und Extraktionsverfahren, vermieden werden.

Eine weitere Aufgabe bestand darin, ein kostengünstig durchführbares Verfahren anzugeben, das großtechnisch anwendbar ist. Darüber hinaus sollte das Verfahren mit kommerziell erhältlichen Komponenten leicht und einfach ausführbar sein.

Aufgabe der Erfindung war auch die Schaffung verbesserter Lösungen von einem Polymer enthaltend wiederkehrende Azoleinheiten. Außerdem soll deren Verwendung angegeben werden.

Gelöst werden diese sowie weitere nicht explizit genannten Aufgaben, die jedoch aus den hierin einleitend diskutierten Zusammenhängen ohne weiteres ableitbar oder erschließbar sind, durch ein Verfahren zur Herstellung einer Lösung von einem Polymer enthaltend wiederkehrende Azoleinheiten mit allen Merkmalen des Patentanspruchs 1. Zweckmäßige Abwandlungen des erfindungsgemäßen Verfahrens werden in den auf Anspruch 1 rückbezogenen Unteransprüchen unter Schutz gestellt.

Dadurch, daß man bei einem Verfahren der eingangs genannten Art ein hinreichend getrocknetes Polymer enthaltend wiederkehrende Azoleinheiten der allgemeinen Formel (1) oder (2) einsetzt, welches zu 90 Gew.% bezogen auf das Gesamtgewicht des Polymers enthaltend wiederkehrende Azoleinheiten eine Korngröße kleiner 1 mm hat, gelingt es auf nicht ohne weiteres vorhersehbare Weise, Polymerlösungen enthaltend wiederkehrende Azoleinheiten zugänglich zu machen, die im wesentlichen frei von Verunreinigungen in Form von niedermolekularen Zersetzungsprodukten wie Dimethylamin und Trimethylamin sowie durch Filtration abtrennbaren Anteilen sind. Die genannte Herstellungsart ist besonders kostengünstig durchführbar.
Daß man Lösungen von einem Polymer enthaltend wiederkehrende Azoleinheiten, die im wesentlichen frei von Verunreinigungen in Form von niedermolekularen Zersetzungsprodukten wie Dimethylamin und Trimethylamin sowie durch Filtration abtrennbaren Anteilen sind, erhalten kann, indem man man ein hinreichend getrocknetes Polymer enthaltend wiederkehrende Azoleinheiten der allgemeinen Formel (1) oder (2) einsetzt, welches zu 90 Gew.-% bezogen auf das Gesamtgewicht des Polymers enthaltend wiederkehrende Azoleinheiten eine Korngröße kleiner 1 mm hat, ist insbesondere deswegen überraschend, weil bisher ein vollständiges Lösen von Polymeren enthaltend wiederkehrende Azoleinheiten der allgemeinen Formel (1) oder (2) ohne die Bildung einer signifikanten Menge von Zersetzungsprodukten nicht möglich war. Versucht man die Bildung von Zersetzungsprodukten durch schonendere Lösebedingungen zurückzudrängen, so stellt man fest, daß der Lösevorgang falls überhaupt nur unvollständig verläuft. Hierbei ist insbesondere zu berücksichtigen, daß viele Anwendungen möglichst reine Lösungen von einem Polymer enthaltend wiederkehrende Azoleinheiten erfordern, so daß sowohl Verunreinigungen als auch ungelöste Anteile vor diesen Anwendungen mühsam abgetrennt werden müssen.

Zugleich lassen sich durch das erfindungsgemäße Verfahren eine Reihe weiterer Vorteile erzielen. Hierzu gehören unter anderem:
⇒ Die erfindungsgemäßen Lösungen von einem Polymer enthaltend wiederkehrende Azoleinheiten haben relativ lange Lagerbeständigkeiten von mehreren Wochen bzw. Monaten.
⇒ Auch bei Temperaturen kleiner 260°C kann ein vollständiges Auflösen der Polymere enthaltend wiederkehrende Azoleinheiten der allgemeinen Formel (1) oder (2) erreicht werden.
⇒ Die Lösungen von einem Polymer enthaltend wiederkehrende Azoleinheiten enthalten keine metallischen Verunreinigungen.
⇒ Das Verfahren ist einfach und sicher großtechnisch durchführbar.

Mit Hilfe des Verfahrens der vorliegenden Erfindung können Lösungen mit einem vorher definierten Gehalt eines Polymers enthaltend wiederkehrende Azoleinheiten hergestellt werden.

Die vorliegende Erfindung bezieht sich auf Polymere enthaltend wiederkehrende Azoleinheiten der allgemeinen Formel

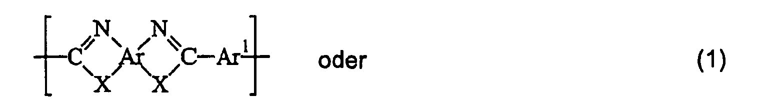

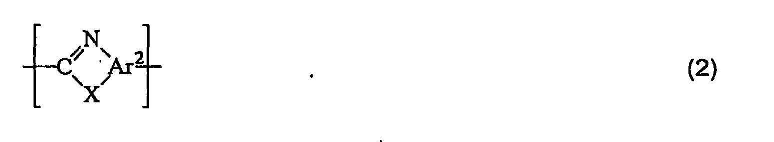

Die Reste Ar, Ar¹ und Ar² sind vier-, zwei- bzw. dreibindige aromatische oder heteroaromatische Gruppen, die ein- oder mehrkernig sein können. Bevorzugte Gruppen leiten sich von Benzol, Naphthalin, Biphenyl, Diphenylether, Diphenylmethan, Diphenyldimethylmethan, Bisphenon, Diphenylsulfon, Chinolin, Pyridin, Anthracen und Phenanthren, die gegebenenfalls auch substituiert sein können, ab. Dabei ist das Substitionsmuster von Ar¹ beliebig, im Falle vom Phenylen beispielsweise kann Ar¹ ortho-, meta- und para-Phenylen sein. Besonders bevorzugte Gruppen leiten sich von Benzol und Biphenylen, die gegebenenfalls auch substituiert sein können, ab.

Die Reste X sind ein Sauerstoffatom (Benzoxaleinheit), ein Schwefelatom (Benzthiazoleinheit) oder eine Aminogruppe (Benzimidazoleinheit), die ein Wasserstoffatom, eine 1-20 Kohlenstoffatome aufweisende Gruppe, vorzugsweise eine verzweigte oder nicht verzweigte Alkyl- oder Alkoxygruppe, oder eine Arylgruppe als weiteren Rest trägt. Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen. Bevorzugte aromatische Gruppen sind Phenyl- oder Naphthyl-Gruppen. Die Alkylgruppen und die aromatischen Gruppen können substituiert sein. Bevorzugte Substituenten sind Halogenatome wie z. B. Fluor, Aminogruppen oder kurzkettige Alkylgruppen wie z. B. Methyl- oder Ethylgruppen.

Sofern im Rahmen der vorliegenden Erfindung Polyazole mit wiederkehrenden Einheiten der Form (1) eingesetzt werden, sollen die Reste X innerhalb einer wiederkehrenden Einheit gleich sein.

Ein erfindungsgemäßes Polyalzol kann grundsätzlich auch unterschiedliche wiederkehrende Einheiten aufweisen, die sich beispielsweise in ihrem Rest X unterscheiden. Vorzugsweise jedoch weist es nur gleiche wiederkehrende Einheiten auf.

In einer bevorzugten Ausführungsform der vorliegenden Erfindung ist das Polymer enthaltend wiederkehrende Azoleinheiten ein Copolymer, das mindestens zwei Einheiten der Formel (1) und/oder (2) enthält, die sich voneinander unterscheiden.

In einer besonders bevorzugten Ausführungsform der vorliegenden Erfindung ist das Polymer enthaltend wiederkehrende Azoleinheiten ein Polyazol, das nur Einheiten der Formel (1) und/oder (2) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.
Im Rahmen der vorliegenden Erfindung werden Polymere enthaltend wiederkehrenden Benzimidazoleinheiten bevorzugt eingesetzt. Ein Beispiel eines äußerst zweckmäßigen Polymers enthaltend wiederkehrende Benzimidazoleinheiten wird durch Formel (3) wiedergegeben: 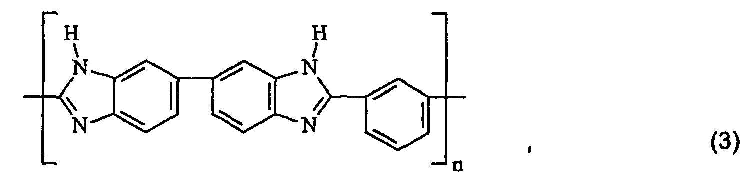 wobei n eine ganze Zahl größer gleich 10, vorzugsweise größer gleich 100 ist.

Das Polymer enthaltend wiederkehrende Azoleinheiten muß für die Durchführung des vorliegenden Verfahren getrocknet sein. Die Technik des Trocknens eines Polymers, insbesondere eines Polymers enthaltend wiederkehrende Azoleinheiten ist dem Fachmann bekannt. Sie bezeichnet die Entfernung von nicht chemisch gebundenem Wasser aus dem Polymer (Feuchtigkeitsentzug) durch Erhitzen mit oder ohne Vakuum. Ein charakteristischer Parameter für die Trockenheit eines Polymers ist der Restwassergehalt des Polymers, der angibt, wieviel Gewichts-Prozent Wasser bezogen auf das Gesamtgewicht des Polymers im Polymer enthalten sind. Methoden zur Bestimmung des Restwassergehalts eines Polymers, insbesondere eines Polymers enthaltend wiederkehrende Azoleinheiten sind dem Fachmann bekannt. Sie kann beispielsweise an einer Trocknungswaage bestimmt werden.

Der Restwassergehalt des eingesetzten Polymer beträgt 3 Gew.-% oder weniger.

Da Polymere enthaltend wiederkehrende Azoleinheiten bekanntermaßen eine ausgeprägte Neigung haben, Wasser zu absorbieren, müssen die getrockneten Polymere enthaltend wiederkehrende Azoleinheiten mit großer Sorgfalt gehandhabt werden, bis sie in Lösungen eines Polymers enthaltend wiederkehrende Azoleinheiten umgewandelt werden.

Beim vorliegenden Verfahren werden Polymere enthaltend wiederkehrende Azoleinheiten der allgemeinen Formel (1) oder (2) in N,N-Dimethylacetamid mit einem niedrigem Wassergehalt gelöst. Es ist bekannt, daß Wasser im N,N-Dimethylacetamid die Löslichkeit von Polymeren enthaltend wiederkehrende Azoleinheiten herabsetzt und während des Lösevorgangs zur Bildung von Alkylaminen durch Hydrolyse von N,N-Dimethylacetamid führen kann. Die Anwesenheit solcher Verunreinigungen in der Lösung eines Polymers enthaltend wiederkehrende Azoleinheiten ist aus oben genannten Gründen unzweckmäßig. Sie können einem unangenehmen Geruch der Lösung eines Polymers enthaltend wiederkehrende Azoleinheiten bewirken und limitieren ihr Anwendungsgebiet.

Unter "niedrigem Wassergehalt" wird gemäß der Erfindung im Zusammenhang mit N,N-Dimethylacetamid ein Wassergehalt kleiner 0,4 Gew.-% bezogen auf das Gesamtgewicht des N,N-Dimethylacetamids, verstanden. Besonders bevorzugt ist die Verwendung von N,N-Dimethylacetamid mit einem Wassergehalt kleiner 0,3 Gew.-% bezogen auf das Gesamtgewicht des N,N-Dimethylacetamids. Ganz besonders bevorzugt ist die Verwendung von N,N-Dimethylacetamid mit einem Wassergehalt kleiner 0,2 Gew.-% bezogen auf das Gesamtgewicht des N,N-Dimethylacetamids. In einer ganz besonders bevorzugten Ausführungsform der vorliegenden Erfindung wird N,N-Dimethylacetamid mit einem Wassergehalt kleiner 0,15 Gew.-%, Insbesondere kleiner 0,1 Gew.-%, bezogen auf das Gesamtgewicht des N,N-Dimethylacetamids verwendet.

Die Temperatur ist ein weiterer Parameter des vorliegenden Verfahrens. Es muß nicht komplett bei einer einheitlichen Temperatur durchgeführt werden. Eine bevorzugte Ausführungsform beinhaltet die Schritte:
(1) Befüllen des Reaktionsgefäßes mit Polymer enthaltend wiederkehrende Azoleinheiten und N,N-Dimethylacetamid bei Raumtemperatur;
(*2*) Erwärmen der Reaktionsgefäßes auf eine bestimmte Maximaltemperatur;
(*3*) Rühren bei einer konstanten Temperatur, besonders bevorzugt bei der Maximaltemperatur;
*(4)* Abkühlen des Reaktionsgefäßes;

Im folgenden wird unter dem Begriff Temperatur, die Maximaltemperatur verstanden. Das erfindungsgemäße Verfahren wird bei einer Temperatur zwischen 25°C und 259°C durchgeführt. Ganz besonders bevorzugte Temperaturen liegen zwischen 160°C und 250°C. Noch mehr bevorzugte Temperaturen liegen zwischen 170°C und 240°C. Ganz besonders günstig sind Temperaturen zwischen 180°C und 220°C. In einer ganz besonders bevorzugten Ausführungsform liegt die Temperatur zwischen 180°C und 210°C.

In einer bevorzugten Ausführungsform der vorliegenden Erfindung ist die Verwendung von Inertgas zum Lösen des Polymers enthaltend wiederkehrende Azoleinheiten bevorzugt. Zu einsetzbaren Inertgasen gehören unter anderen Stickstoff, Argon usw. sowie Mischungen solcher Gase. In einer besonders bevorzugten Ausführungsform wird das Polymer enthaltend wiederkehrende Azoleinheiten im Lösungsmittel in einem Reaktor dispergiert und der Sauerstoff aus dem Reaktor entfernt, z. B. indem man hochreinen Stickstoff mit einem niedrigen Wassergehalt 30 Minuten durch die Lösung leitet.
Für die Durchführung des erfindungsgemäßen Verfahrens ist die Korngröße des Polymers enthaltend wiederkehrende Azoleinheiten von Bedeutung. Die Komgröße eines Polymers bezeichnet seine Teilchengröße. Ihre genaue Definition hängt von der Teilchenform des Polymers ab. Für die Durchführung des Verfahrens bestehen hinsichtlich der Teilchenform keinerlei Beschränkungen, vielmehr.sind alle denkbaren Teilchenformen zur Herstellung der Lösungen von einem Polymer enthaltend wiederkehrende Azoleinheiten geeignet.

Zur Ermittlung der Komgröße und der Korngrößen-Verteilung existieren eine Reihe von Meßmethoden. Im Rahmen dieser Erfindung genügt zur Korngrößen-Bestimmung die Siebanalyse. In einer Siebmaschine ist ein Satz von Sieben verschiedener Maschenweiten übereinander angeordnet. Bei der Siebanalyse wird die Korngröße durch die Maschenweite desjenigen Siebes bestimmt, welches das Korn (Siebdurchlauf, Unterkorn) gerade noch passieren läßt. Die Siebe werden nach lichter Maschenweite in Millimeter charakterisiert.

Für die Durchführung des vorliegenden Verfahrens werden Polymere enthaltend wiederkehrende Azoleinheiten, welche zu 90 Gew.-% eine Korngröße von kleiner 1 mm haben, eingeseht. Bevorzugt sind Polymere enthaltend wiederkehrende Azoleinheiten, welche zu 90 Gew.-% eine Korngröße von kleiner 700 µm haben. In einer besonders bevorzugten Ausführungsform werden Polymere enthaltend wiederkehrende Azoleinheiten eingesetzt, welche zu 90 Gew.-% eine Komgröße von kleiner 400 µm haben.

Für das vorliegende Verfahren wird die Korngröße des Polymers enthaltend wiederkehrende Azoleinheiten vorzugsweise durch Mahlen reduziert. Auch andere Methoden sind denkbar. Unter Mahlen versteht man einen Prozeß des Zerkleinerns, bei dem in Brechern und besonders in Mühlen verschiedener Bauart das Mahlgut in der Korngröße reduziert wird. Das Mahlen kann als trockenes oder nasses Verfahren oder auch als Kaltmahlung (kryogenes Mahlen) durchgeführt werden. In einer besonders bevorzugten Ausführungsform des vorliegenden Verfahrens wird das Polymer enthaltend wiederkehrende Azoleinheiten zunächst gemahlen und danach getrocknet.

Ein weiteres Merkmal des vorliegenden Verfahrens ist die Zeitdauer über die man das Polymer enthaltend wiederkehrende Azoleinheiten löst. Sie umfaßt die Verweildauer des Polymers enthaltend wiederkehrende Azoleinheiten im Reaktor. Kurze Zeitdauern werden vor allem aus ökonomischen Überlegungen angestrebt.

Vorzugsweise wird das Polymer enthaltend wiederkehrende Azoleinheiten in weniger als 10 Stunden gelöst. Besonders bevorzugte wird das Lösen in weniger als 6 Stunden durchgeführt. In einer ganz besonders bevorzugten Ausführungsform wird das Polymer enthaltend wiederkehrende Azoleinheiten in weniger als 4 Stunden gelöst.

Erfindungsgemäße Lösungen eines Polymers enthaltend wiederkehrende Azoleinheiten enthalten allenfalls geringe Mengen an Nebenprodukten. Methoden zur Bestimmung der Anteile von niedermolekularen Verbindungen, wie Dimethylamin und Trimethylamin, in Lösungen sind dem Fachmann bekannt. Sie können beispielsweise über Gaschromatographie erhalten werden. Auch andere Methoden sind denkbar. Bevorzugt ist die Bestimmung der Anteile von niedermolekularen Verbindungen, wie Dimethylamin und Trimethylamin, mittels head-space Analyse bei 50°C, wobei die Art der Verunreinigungen mit einer MS-Kopplung ermittelt werden kann. Vorzugsweise wird dabei die Höhe des DMAc-Peaks auf eine Einheit gesetzt. Die Höhe der Peaks der Verunreinigungen liegen dann bei erfindungsgemäßen Verfahren unter 0,1 Einheiten.

Die erfindungsgemäßen Lösungen eines Polymers enthaltend wiederkehrende Azoleinheiten können im wesentlichen frei von durch Filtration abtrennbaren Anteilen sein. Das Filtrieren ist an sich bekannt und beispielsweise in Ullmann's Encyclopedia of Industrial Chemistry, Fifth Edition, Stichwort "Filtration", beschrieben. Hierunter wird im Rahmen der vorliegenden Erfindung das Abscheiden von Feststoffteilchen aus einer Flüssigkeit mit Hilfe einer porösen Schicht (Filtermittel), die für die Flüssigkeit durchlässig ist, während die Feststoffe zurückgehalten werden, verstanden. Es wird angenommen, daß die Trennung aufgrund der Größenunterschiede erfolgt.

Vorzugsweise findet die Filtration bei 100°C statt. Sie kann jedoch bei einer anderen Temperatur durchgeführt werden, wenn die Viskosität der Lösung es erfordert.

Bevorzugt wird die Filtration der Polymerlösung enthaltend wiederkehrende Benzazoleinheiten über einen Kerzen- oder Tiefenfilter mit einer Porengröße im Bereich von 0,01 µm bis 1 mm. Besonders bevorzugt sind Porengrößen im Bereich von 0.1 µm bis 100 µm und ganz besonders bevorzugt im Bereich von 0,3 µm bis 10 µm. Diese Angaben dienen als Anhaltspunkte, da die Reinigung auch von der Viskosität des Lösungsmittels und der Komgröße des Niederschlags abhängig ist.

Bevorzugte Lösungen eines Polymers enthaltend wiederkehrende Azoleinheiten enthalten weniger als 3 Gew.-% an durch Filtration über einen Filter mit 4 µm Porenweite bei 100°C abtrennbaren Anteilen.

Die durch das erfindungsgemäße Verfahren erhaltenen Lösungen eines Polymers enthaltend wiederkehrende Azoleinheiten sind vorzugsweise dadurch gekennzeichnet, daß sie im wesentlichen frei von Verunreinigungen in Form von niedermolekularen Zersetzungsprodukten wie Dimethylamin und Trimethylamin sowie durch Filtration abtrennbaren Anteilen sind.

Vorzugsweise ist der Gehalt des Polymers enthaltend wiederkehrende Azoleinheiten von den erfindungsgemäßen Lösungen 25 Gew.-% oder weniger bezogen auf das Gesamtgewicht der Lösung. Besonders bevorzugt werden Lösungen mit einem Gehalt des Polymers enthaltend wiederkehrende Azoleinheiten im Bereich zwischen 1 Gew.-% und 40 Gew.-% bezogen auf das Gesamtgewicht der Lösung. Ganz besonders bevorzugt werden Lösungen mit einem Gehalt des Polymers enthaltend wiederkehrende Azoleinheiten im Bereich zwischen 10 Gew.% und 30 Gew.% bezogen auf das Gesamtgewicht der Lösung. Extrem bevorzugt werden Lösungen mit einem Gehalt des Polymers enthaltend wiederkehrende Azoleinheiten im Bereich zwischen 15 Gew.-% und 25 Gew.-% bezogen auf das Gesamtgewicht der Lösung.

Verfahren zur Herstellung von Membranen sind an sich bekannt. Die resultierenden Membranen sind vielfältig verwendbar. Aufgrund ihrer besonderen Eigenschaften werden Polymer-Elektrolyt-Membranen vorzugsweise in Brennstoffzellen eingesetzt.

Nachfolgend wird die Erfindung durch Beispiele und Vergleichsbeispiel, die unter Verwendung erfindungsgemäßer Lösungen erhältlich sind, eingehender erläutert, ohne daß die Erfindung auf diese Beispiele beschränkt werden soll.

### 1. Beispiel (Vergleich) (gemahlen, 260°C)

Polybenzimidazol wird mit Hilfe einer Mühle derart zerkleinert, daß 90 Gew.-% der Teilchen eine Komgröße kleiner 300 µm erreichen. Das erhaltene Pulver wird im Hochvakuum bei 95 - 110°C bis zur Gewichtskonstanz getrocknet. 3644 g N,N-Dimethylacetamid (Restwassergehalt: 0,27 Gew.-%) und 800 g getrocknetes Polybenzimidazol-Pulver werden unter Inertgas in einen Reaktor gefüllt und innerhalb von 3,5 h auf 260°C aufgeheizt. Das Polymer wird für 2 h bei dieser Temperatur gerührt, dann innerhalb von 2 h auf 100°C abgekühlt und über eine beheizte Drucknutsche mit einem PP-Tiefenfilter (5 µm) abfiltriert. Der Feststoffgehalt der so erhaltenen Polybenzimidazollösung wird durch Ausfällen eines Teils der Lösung, Abfiltrieren des gefällten Polymers und Trocknen des Rückstands im Vakuum bis zur Gewichtskonstanz ermittelt. Mit Hilfe der Gravimetrie wird ein Feststoffgehalt von 14,5 Gew.-% (± 0,4 Gew.-%; Soll 17,5 Gew.-%) bestimmt.

Die Zersetzungsprodukte der so hergestellten Lösung werden durch GC-Analyse bestimmt. Hierzu wird eine kleine Menge der Lösung in das GG-Gerät eingebracht und dort auf 50°C aufgeheizt. Entweichende Bestandteile werden aufgefangen und über eine GC-Säule getrennt. Die Analyse offenbart mehrere Zersetzungsprodukte in höheren Konzentrationen. Die Zuordnung der Zersezungsprodukte geschieht massenspektrometrisch. So wird neben Wasser (1, M = 18 g/mol) auch Dimethylamin (2, M = 45 g/mol), Trimethylamin (3, M = 59 g/mol) und N,N,N',N'-Tetramethyl-diaminomethan (4, M= 102 g/mol) detektiert. Der Peak Nr. 5 ist schließlich Dimethylacetamid (M=87 g/mol) zuzuordnen (s. Tabelle 1).

**Tabelle 1: GC-Analyse von Beispiel 1**

| **Peak** | **Peakhöhe [cm]** | **Verhältnis zu Peak 5 [%]** | **Flächengew . [mg]** | **Gew.-%** |
|---|---|---|---|---|
| 1 | 0,17 | 0,71 | 0,35 | 0,48 |
| 2 | 9,00 | 37,74 | 11,87 | 16,44 |
| 3 | 0,58 | 2,43 | 0,56 | 0,78 |
| 4 | 1,52 | 6,37 | 2,52 | 3,49 |
| 5 | 23,85 | 100,00 | 56,91 | 78,81 |
| Summe | | | 72,21 | 100,00 |

Aufgrund der leichtsiedenden Komponenten, wie Dimethylamin und Trimethylamin, kommt es beim Gießen einer Membran aus solchen Lösungen und dem anschließenden Trocknen zu einer Blasenbildung innerhalb der Polymerschicht, die Qualität der Membran ist entsprechend geringer.

### 2.Beispiel (gemahlen, 200°C)

Polybenzimidazol wird mit Hilfe einer Mühle so zerkleinert, daß 90 Gew.-% der Teilchen eine Komgröße kleiner 300 µm erreichen. Das erhaltene Pulver wird im Hochvakuum bei 95 - 110°C bis zur Gewichtskonstanz getrocknet. 3644 g N,N-Dimethylacetamid (Restwassergehalt: 0,27 Gew.-%) und 800 g getrocknetes Polybenzimidazol-Pulver werden unter Inertgas In einen Reaktor gefüllt und innerhalb von 2 h auf 200°C aufgeheizt. Der Kessel wurde während der Aufheizphase bei 120°C und bei 150°C entspannt. Das Polymer wird für 4 h bei dieser Temperatur gerührt, dann innerhalb von 1,5 h auf 100°C abgekühlt und über eine beheizten Drucknutsche mit einem PP-Tiefenfilter (5 µm) abfiltriert. Der Feststoffgehalt der so erhaltenen Polybenzimidazollösung wird durch Ausfällen eines Teils der Lösung, Abfiltrieren des gefällten Polymers und Trocknen des Rückstands im Vakuum bis zur Gewichtskonstanz ermittelt. Mit Hilfe der Gravimetrie wird ein Feststoffgehalt von 14,95 Gew.-% (± 0,4 Gew.-%; Soll 15,0 Gew.-%) bestimmt.

**Tabelle 2: GC-Analyse von Beispiel 2**

| **Peak** | **Peakhöhe** | **Verhältnis zu Peak 5** | **Flächengew .** | **Gew.-%** |
|---|---|---|---|---|
| | **[cm]** | **[%]** | **[mg]** | |
| 1 | 0,18 | 0,75 | 0,45 | 1,24 |
| 2 | 0,00 | 0,00 | 0,00 | 0,00 |
| 3 | 0,00 | 0,00 | 0,00 | 0,00 |
| 4 | 0,00 | 0,00 | 0,00 | 0,00 |
| 5 | 23,85 | 100,00 | 35,70 | 98,76 |
| Summe | | | 72,21 | 100,00 |

Mittels GC-Analyse lassen sich keine Zersetzungsprodukte in dieser Lösung eines Polymers enthaltend wiederkehrende Azoleinheiten detektieren (s. Tabelle 2). Aufgrund der Abwesenheit von Zersetzungsprodukten in der Lösung läßt sich diese gut zu Membranen hoher Qualität mit Dicken zwischen 5 und 100 µm verarbeiten.

### 3. Beispiel (Vergleich) (ungemahlen, 200°C)

Es wird ein Polybenzimidazol eingesetzt, bei welchem 10,86 Gew.-% der Teilchen eine Komgröße größer 1000 µm aufweisen. Das Polybenzimidazol wird im Hochvakuum bei 95 -110°C bis zur Gewichtskonstanz getrocknet. 3250 g N,N-Dimethylacetamid (Restwassergehalt: 0,27 Gew.-%) und 600,7 g getrocknetes Polybenzimidazol werden unter Inertgas In einen Reaktor gefüllt und innerhalb von 2 h auf 200°C aufgeheizt. Das Polymer wird für 3 h bei dieser Temperatur gerührt, dann innerhalb von 1,5 h auf 100°C abgekühlt und über eine beheizte Drucknutsche mit einem PP-Tiefenfilter (5 µm) abfiltriert. Der Feststoffgehalt der so erhaltenen Polybenzimidazollösung wird durch Ausfällen eines Teils der Lösung, Abfiltrieren des gefällten Polymers und Trocknen des Rückstands Im Vakuum bis zur Gewichtskonstanz ermittelt. Mit Hilfe der Gravimetrie wird ein Feststoffgehalt von 14,04 Gew.-% (± 0,4 Gew.-%; Soll 16,0 Gew.-%) bestimmt.

### Lagerbeständigkeit erfindungsgemäßer Polymerlösungen

Zur Ermittlung der Lagerbeständigkeit wurden Polybenzimidazollösungen analog dem Beispiel 2 hergestellt und über einen Kerzenfilter (120 µm) oder einen Tiefenfilter bei einer Temperatur von 100°C filtriert. Als Lagerbeständigkeit wird die Zeitspanne von der Herstellung der Lösung bis zu ihrem Gelieren definiert. Die Ergebnisse sind in Tabelle 3 zusammengefaßt.

**Tabelle 3: Lagerbeständigkeit erfindungsgemäßer Polybenzimidazollösungen**

| w(Polybenzimidazol) | Lagerbeständigkeit |
|---|---|
| [Gew.-%] | [Tage] |
| 20 | <7 |
| 17,5 | ca. 14 |
| 15 | ca. 21 |
| 12 | > 21 |

| | |
|---|---|
| w(Polybenzimidazol): Gewichtsanteil des Polybenzimidazols bezogen auf das Gesamtgewicht der Lösung | |

## Patentansprüche

1. Verfahren zur Herstellung einer Lösung von einem Polymer enthaltend wiederkehrende Azoleinheiten, bei welchem man ein Polymer mit einem Wassergehalt von 3 Gew.-% oder weniger bezogen auf das Gesamtgewicht des Polymers enthaltend wiederkehrende Azoleinheiten der allgemeinen Formel 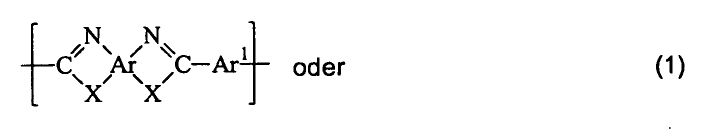 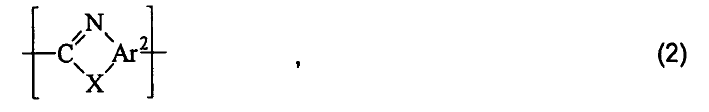 wobei die Reste Ar, Ar¹ und Ar² vier-, zwei- bzw. dreibindige aromatische oder heteroaromatische Gruppen und die Reste X, die innerhalb einer Wiederholungseinheit gleich sind, ein Sauerstoffatom, ein Schwefelatom oder eine Aminogruppe, die ein Wasserstoffatom, eine 1-20 Kohlenstoffatome aufweisende Gruppe, vorzugsweise eine verzweigte oder nicht verzweigte Alkyl- oder Alkoxygruppe, oder eine Arylgruppe als weiteren Rest trägt, sind,
in N,N-Dimethylacetamid mit einem Wassergehalt kleiner als 0,4 Gew.-% bezogen auf das Gesamtgewicht des N,N-Dimethylacetamids bei einer Temperatur oberhalb Raumtemperatur unter Inertgasatmosphäre löst, **dadurch gekennzeichnet, daß** man ein Polymer enthaltend wiederkehrende Azoleinheiten der allgemeinen Formel (1) oder (2) einsetzt, welches zu 90
Gew.-% bezogen auf das Gesamtgewicht des Polymers enthaltend wiederkehrende Azoleinheiten eine Korngröße kleiner 1 mm hat und das Polymer enthaltend wiederkehrende Azoleinheiten bei einer Temperatur im Bereich von 25°C bis 259°C löst.

2. Verfahren gemäß Anspruch 1, **dadurch gekennzeichnet daß** man das Polymer enthaltend wiederkehrende Azoleinheiten vor dem Lösen in N,N-Dimethylacetamid zunächst mahlt und danach trocknet.

3. Verfahren gemäß einem der vorangehenden Ansprüche, **dadurch gekennzeichnet, daß** man das Polymer enthaltend wiederkehrende Azoleinheiten über eine Zeitdauer von weniger als 10 Stunden löst.

4. Verfahren gemäß einem der vorangehenden Ansprüche, **dadurch gekennzeichnet, daß** man ein Polymer enthaltend wiederkehrende Benzimidazoleinheiten gemäß der folgenden Formel (3) einsetzt: 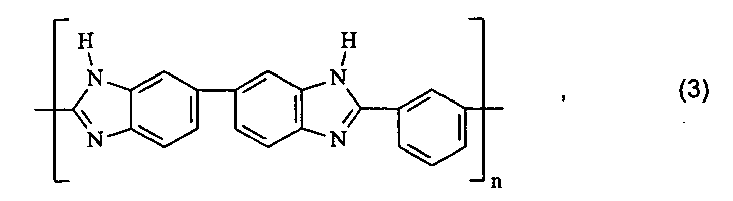 wobei n eine ganze Zahl größer gleich 10 ist.

## Claims

1. A method of preparing a solution of a polymer comprising recurring azole units, which comprises dissolving a polymer having a water content of 3 % by weight or less based on the total weight of the polymer comprising recurring azole units of the general formula 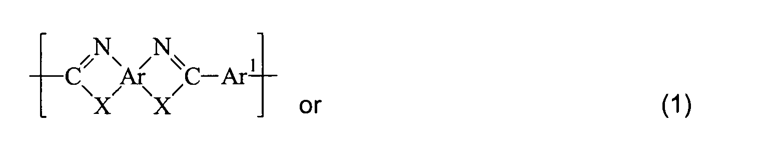 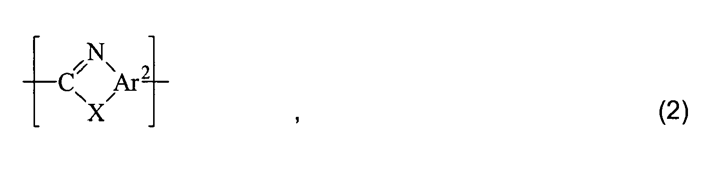 where the radicals Ar, Ar¹ and Ar² are tetravalent, divalent or trivalent aromatic or heteroaromatic groups and the radicals X, which are identical within a repeating unit, are each an oxygen atom, a sulfur atom or an amino group bearing a hydrogen atom, a group having 1-20 carbon atoms, preferably a branched or unbranched alkyl or alkoxy group, or an aryl group as further radical,
in N,N-dimethylacetamide having a water content of less than 0.4 % by weight based on the total weight of the N,N-dimethylacetamide at a temperature above room temperature under an inert gas atmosphere, **characterized in that** a polymer comprising recurring azole units of the formula (1) or (2) of which 90% by weight based on the total weight of the polymer comprising recurring azole units has a granular size of less than 1 mm is used and the polymer comprising recurring azole units is dissolved at a temperature in the range from 25°C to 259°C.

2. The method as claimed in claim 1, **characterized in that** the polymer comprising recurring azole units is firstly milled and then dried before dissolution in N,N-dimethylacetamide.

3. The method as claimed in any of the preceding claims, **characterized in that** the polymer comprising recurring azole units is dissolved over a period of less than 10 hours.

4. The method as claimed in any of the preceding claims, **characterized in that** a polymer comprising recurring benzimidazole units of the formula (3): 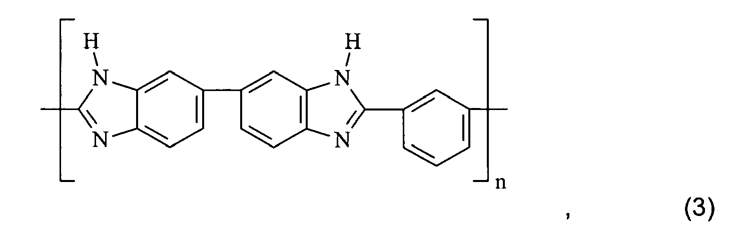 where n is an integer greater than or equal to 10, is used.

## Revendications

1. Procédé de production d'une solution constituée d'un polymère contenant des unités azole récurrentes, dans le quel un polymère avec une teneur en eau de 3% en poids, ou moins, par rapport au poids total du polymère contenant des unités azole récurrentes de la formule 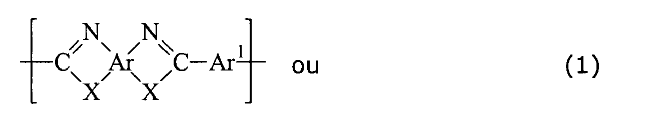 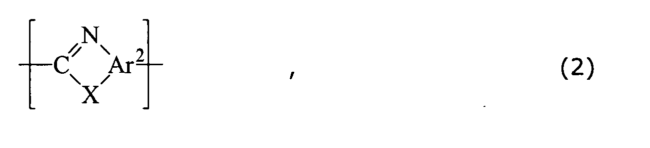 Où les restes Ar, Ar1 et Ar2 représentent des groupes aromatiques ou hétéroaromatiques à quatre-, deux- resp. trois liaisons, et les restes X, qui sont les mêmes au sein d'une unité de répétition, représentent un atome d'oxygène, un atome de soufre ou un
groupe amine, qui comporte comme reste suplementaire, un atome d'hydrogène, un groupe de 1-20 atomes de carbone, de préférence un groupe alkyl ou alkoxy ramifié ou linéaire, ou bien un groupe aryle, est dissous dans N,N-diméthylacétamide avec une teneur en eau inférieur à 0,4% en poids par rapport au poids total du N,N-diméthylacétamide à une température supérieur à la température ambiante sous une atmosphère à gaz inerte, **caractérisé en ce que** on utilise un polymère contenant des unités azole récurrentes de la formule générale (1) ou (2), lequel possède à 90% en poids par rapport à son poids total, une taille de grain inférieur à 1mm, et on dissous le polymère contenant des unités azole récurrentes à un température située entre 25 et 259°C.

2. Procédé selon revendication 1, **caractérisé en ce que** le polymère contenant des unités azole récurrentes est tout abord moulu et séché, avant d'être dissous dans le N,N-diméthylacétamide.

3. Procédé selon l'une des revendications précédentes, **caractérisé en ce que** le polymère contenant des unités azole récurrentes est dissous pendant une durée de moins de 10 heures.

4. Procédé selon l'une des revendications précédentes, **caractérisé en ce que** un polymère contenant des unités benzimidazole récurrentes de la formule (3) suivante est utilisé : 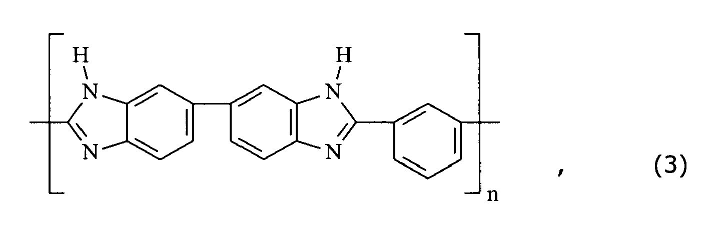 Où n représente nombre entier supérieur ou égal à 10.
